# FASCICULE DE BREVET EUROPEEN

(11) **EP 3 928 613 B1**
(45) Date de publication et mention de la délivrance du brevet: **27.11.2024**
(21) Numéro de dépôt: 21175327.2
(22) Date de dépôt: 21.05.2021
(51) Int. Cl.: A01G 17/02, A01D 46/28, A01D 46/00, A01G 3/08

(54) **EFFEUILLEUSE**
ENTBLÄTTERUNGSMASCHINE
LEAF STRIPPER

(30) Priorité: 24.06.2020 FR 2006587
(43) Date de publication de la demande: 29.12.2021
(73) Titulaire: Collard, 51150 Bouzy (FR)
(72) Inventeur: COLLARD, Yannick, 51150 BOUZY (FR)
(74) Mandataire: Hirsch & Associés

(56) Documents cités:
- EP-A1- 0 898 877
- WO-A1-2016/001864
- FR-A1- 2 289 112
- FR-A1- 3 069 131
- US-B2- 9 247 691

## Description

### DOMAINE DE L'INVENTION

L'invention concerne le domaine des machines agricoles. Plus particulièrement, l'invention concerne une effeuilleuse ou défoliateur de feuilles apte à être adapté aux moyens de transport conventionnels et permettant de dégarnir de feuilles n'importe quels types de végétations grâce à sa capacité à s'adapter à la forme particulière des végétaux et ce dans le but de la défoliation au moins partielle de la végétation. L'effeuilleuse selon l'invention présente les degrés de liberté lui permettant de s'adapter à toutes les configurations des espèces de végétation sur lesquelles on souhaite pratiquer la défoliation.

### ART ANTERIEUR

En viticulture, le besoin d'élimination des feuilles des vignes est connu. Le but est d'éliminer les feuilles qui cachent les grappes et de permettre au soleil de contribuer à leur maturation ou de rendre les grappes plus visibles et accessibles afin de faciliter grandement la récolte manuelle. Une autre fonction de l'effeuillage est de fournir une meilleure aération de la végétation, réduisant ainsi le développement de maladies.

Une tête d'effeuillage peut fonctionner selon n'importe quel principe. Selon un principe possible, l'effeuillage est réalisé pneumatiquement à l'aide d'un jet d'air qui est propulsé, selon un axe de travail, depuis une tête d'effeuillage vers la plante à défolier. Le brevet français FR 3 069 131 de la demanderesse est un exemple de telles têtes d'effeuillage.

Les vignes ont des formes et des tailles sensiblement identiques. Aussi, une effeuilleuse de vigne comprend classiquement un support de forme fixe, apte par exemple à «chevaucher» un rang de vigne, et portant une ou plusieurs têtes de décapage, comme illustré à la fig. 9 du brevet français précité FR 3.069.131 de la demanderesse.

Il est apparu récemment qu'un effeuillage de ce type pouvait être utile dans le cas d'autres plantations, qu'il s'agisse d'arbustes (groseilles, framboises, etc.) ou d'arbres (pommiers, poiriers, etc.), ou d'autres arbres, notamment les plantations urbaines.

Le brevet européen EP 0 898 877 divulgue une effeuilleuse pour vigne, pourvue de moyens de coupe et de moyens d'aspiration comprenant un logement pour stocker les déchets produits. De telles machines ne sont donc d'une part pas conçues pour travailler à une certaine hauteur, et d'autre part ne possèdent pas les degrés de liberté que possède l'effeuilleuse selon la présente invention. Ledit brevet européen précité mentionne dans la dernière ligne de la description que la machine décrite et revendiquée peut également être utilisée pour l'effeuillage partiel de toute végétation palissée ainsi que pour la taille de haies, d'arbres feuillus et de conifères. Les déchets ainsi obtenus sont selon ce b revêt européen collectés par aspiration dans un boîtier. L'objet de la présente invention n'est ni l'élagage de la végétation et des déchets de bois, ni l'aspiration des déchets, ni le stockage des déchets formés.

On connaît également une effeuilleuse à une seule enveloppe équipée de quatre moyens fixes en forme de tourniquets, qui ne sont donc ni réglables ni orientables. Des effeuilleuses à deux têtes décalées sont également connues.

Le brevet US9 247 691 B2 se rapporte à un système de têtes d'élagage où les forces de cisaillement impliquant l'emploi d'enclumes forcent les cannes dans l'espace entre les enclumes où des forces de cisaillement concentrées sur les cannes provoquent la rupture des cannes. L'alignement d'une pluralité de disques de coupe sur l'arbre de coupe et des ensembles d'enclumes sur l'arbre d'enclume a pour résultat que les cannes sont cassées ou coupées en plusieurs sections. La taille des végétaux, (en anglais «pruning») implique l'emploi de forces de cisaillement, ce que l'on ne veut ni ne peut obtenir par l'effeuillage dont le but et d'éliminer par soufflage les feuilles. On peut s'interroger sur la stabilité de ce système dans le cas de vents forts ou de terrains accidentés.

Les têtes d'effeuillage connues étant tout à fait adaptables à d'autres végétations, le système selon la présente invention est avantageux simultanément ou non pour s'adapter à différentes tailles. De plus, cette configuration permet d'offrir divers angles de travail, donnant ainsi de la polyvalence à un utilisateur travaillant sur différents types, tailles ou formes de plantations, y compris de grands arbres. Le but de l'invention est de fournir une telle effeuilleuse qui puisse être facilement adaptée pour effectuer un effeuillage sur une variété de tailles et de formes de plantations.

### RÉSUMÉ DE L'INVENTION

Afin de satisfaire ce but, l'invention a pour objet une effeuilleuse agricole (1) présentant les degrés de libertés lui permettant de s'adapter à toutes les configurations des espèces de végétation sur lesquelles on souhaite pratiquer la défoliation grâce à sa capacité à s'adapter à la forme particulière des végétaux comprenant au moins une première structure (3) apte à être adaptée aux moyens de transport conventionnels dans une direction horizontale de déplacement selon un axe (X) sensiblement parallèle au plan XY du sol,
cette effeuilleuse comprenant en outre:
- une partie fixe (7) apte à être solidarisée par une extrémité inférieure de celle-ci auxdits moyens de transport
- une partie mobile ou châssis (2), déplaçable verticalement par rapport à ladite partie fixée (7),
- au moins un rail (6) portant au moins deux têtes d'effeuillage (5), supportées par des moyens de support (8) portés par ladite partie mobile ou châssis (2), le au moins un rail étant espacé de ladite structure et généralement parallèle à celle-ci,
- une première liaison apte à générer un mouvement de translation vertical PZ1, obtenu en faisant coulisser la partie supérieure de ladite structure (3) par rapport à ladite partie inférieure fixée (7) de ladite structure (3), selon un axe généralement vertical perpendiculaire à ladite direction horizontale de mouvement (X),
- une deuxième liaison apte à générer un mouvement de translation verticale PZ2 dudit au moins un rail (6) par rapport auxdits moyens de support (8) portés par ladite partie mobile ou châssis (2) selon un deuxième axe Z2 généralement perpendiculaire à ladite direction horizontale de mouvement (X),
- une troisième liaison apte à faire varier un espacement entre ledit au moins un rail et ladite structure (3) en générant un mouvement de translation PY dudit au moins un rail par rapport à ladite structure selon une direction généralement orthogonale à ladite direction d'axe vertical et selon un axe desdits moyens de support (8), et
- une quatrième liaison apte à générer un mouvement de rotation RX dudit au moins un rail (6) autour d'un axe généralement perpendiculaire à ladite direction horizontale de mouvement (X), cette effeuilleuse étant caractérise par:
- une source pneumatique apte à produire de l'air comprimé destiné à être éjecté par les têtes d'effeuillage (5), et un système de tuyaux reliant la source pneumatique à chacune des têtes d'effeuillage pour leur fournir de l'air comprimé à éjecter, et
- les axes des quatre liaisons et la direction de déplacement des moyens de transport étant parallèles ou orthogonaux les uns par rapport aux autres et par rapport à ladite direction horizontale de mouvement (X).

Selon un second mode de réalisation de la présente invention, l'effeuilleuse (1) comporte un second rail (6) permettant d'effectuer l'effeuillage de l'un et de l'autre côté de ladite structure (3) dans une direction horizontale de déplacement selon un axe (X) sensiblement parallèle au sol, le second rail (6) symétrique par rapport au premier, portant au moins une tête d'effeuillage (5) supportée par des moyens de support (8) portés par ladite partie mobile ou châssis (2) et les deux rails (6), étant espacés de ladite structure (3) et généralement parallèles à celle-ci.

Selon un autre mode de réalisation de la présente invention, les au moins deux têtes d'effeuillage sont montées coulissantes sur le rail et mobiles par un mouvement de translation le long du/des rail(s) avec leurs axes de travail sensiblement perpendiculaires à un axe Z2 du rail.

Selon un autre mode encore de réalisation de l'invention, au moins une des têtes d'effeuillage a un degré de liberté permettant un mouvement de translation de celles-ci le long du/des rail(s) indépendamment de chacune des autres têtes d'effeuillage.

Selon encore un autre mode de réalisation de l'invention, au moins une des têtes d'effeuillage desdites têtes d'effeuillage a en outre un degré de liberté permettant un mouvement rotatif (RYa, RYb, RYc) par rapport à un axe de travail (T).

Selon un autre mode encore de réalisation de l'invention, le rail portant les têtes d'effeuillage comprend en outre au moins une articulation autour d'un axe sensiblement parallèle à la direction de déplacement horizontale (X) permettant d'adapter le/les rail(s) à une ligne courbe ou une ligne brisée.

Selon une forme de réalisation de l'invention, la première liaison apte à générer un mouvement de translation verticale PZ1, obtenu en faisant coulisser la partie supérieure de ladite structure par rapport à la partie inférieure fixée de celle-ci ladite troisième liaison étant apte à générer un mouvement de translation PY de l'un ou des deux rails (6) par rapport à ladite structure, sont motorisées.

Selon une autre forme de réalisation de l'invention, la première liaison apte à générer un mouvement de translation verticale PZ1 et la troisième liaison apte à générer un mouvement de translation PY du rail par rapport à la structure sont mises en oeuvre par un actionneur. Selon encore une autre forme de réalisation de l'invention, l'effeuilleuse comprend en plus de ladite structure, une seconde structure sensiblement symétrique à ladite première structure, et permettant d'effectuer l'effeuillage de l'un et de l'autre côté des moyens de transport, ladite seconde structure étant apte à être transportée par lesdits moyens de transport dans une direction horizontale de déplacement selon un axe (X) sensiblement parallèle au sol,
la structure comprenant:
- une partie fixe apte à être solidarisée au moyen de transport, une partie mobile ou châssis, étant déplaçable verticalement par rapport à la partie fixe,
- et un rail portant au moins deux têtes d'effeuillage et supporté par des moyens de support portés par la partie mobile ou châssis, ledit rail étant espacé de la structure et généralement parallèle à celui-ci,
la seconde structure comprenant en outre :
- une première liaison apte à générer un mouvement de translation vertical PZ1, obtenu en faisant coulisser la partie mobile ou châssis (2) par rapport à la partie inférieure fixée de la structure selon un axe généralement vertical perpendiculaire à la direction horizontale X de déplacement,
- une deuxième liaison apte à générer un mouvement de translation verticale PZ2 du rail par rapport aux moyens de support portés par la partie mobile ou châssis selon un deuxième axe Z2 généralement perpendiculaire à la direction horizontale de mouvement,
- une troisième liaison apte à faire varier un espacement entre le rail et la structure en générant un mouvement de translation PY du rail par rapport à la structure selon une direction généralement orthogonale à la direction de l'axe vertical et selon l'axe des moyens de support, et
- une quatrième liaison apte à générer un mouvement de rotation RX du rail autour d'un axe généralement orthogonal à ladite direction horizontale du déplacement.

Selon un mode de réalisation de l'invention, la première structure et la seconde structure forment un seul assemblage.

Selon un mode de réalisation de l'invention, l'effeuilleuse (1) comprend un seul moyen de support consistant en ladite structure (3) supportant chacun desdits rails et comprenant deux liaisons coulissantes (11) chacune apte à faire varier un espacement entre chacun desdits rails et ladite structure (3).

L'invention sera mieux comprise à la lecture de la description qui va suivre, donnée uniquement à titre d'exemple, et en référence aux dessins annexés.

### DESCRIPTION BRÈVE DES DESSINS

FIGURE 1 montre, vu de dos, un mode de réalisation de l'invention dans sa configuration la plus compacte, comportant un rail,
FIGURE 1A vue identique à celle de la FIGURE 1 mais comportant 2 rails;
FIGURE 2 montre le mode de réalisation de la figure 1 dans une configuration déployée,
FIGURE 2A vue identique à celle de la FIGURE 2 mais comportant 2 rails,
FIGURE 3 montre le mode de réalisation de la Fig. 1, en vue de trois quarts de face et illustrant différentes orientations des têtes d'effeuillage,
FIGURE 4 montre le mode de réalisation de la Fig. 1, illustrant sa configuration la plus compacte et montrant un premier positionnement des têtes d'effeuillage,
FIGURE 5 montre le mode de réalisation de la Fig. 1, illustrant une configuration déployée et un autre positionnement des têtes d'effeuillage.

### DESCRIPTION DÉTAILLÉE DES MODES DE RÉALISATION PRÉFÉRÉS

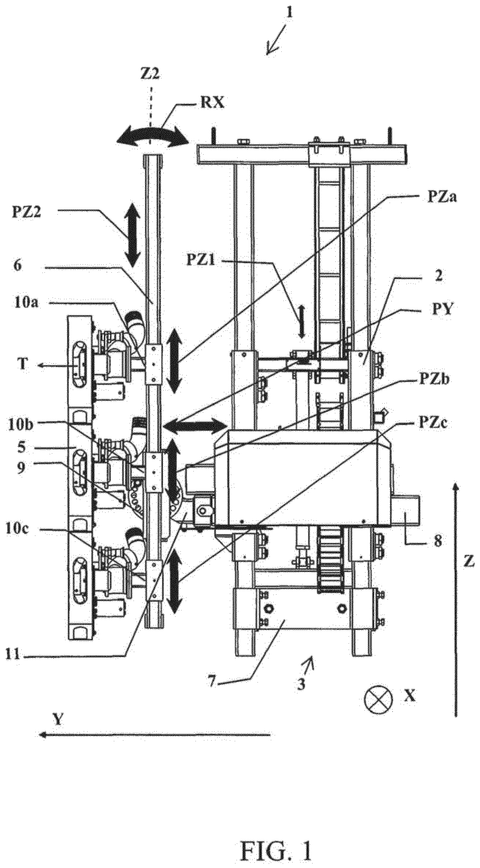

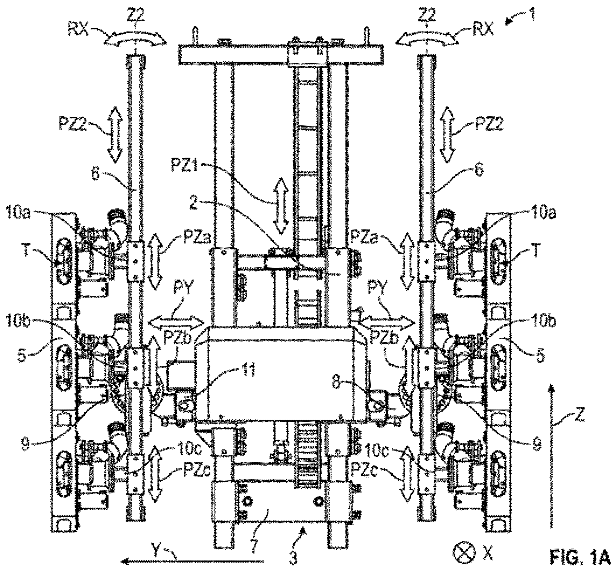

En se référant à la Fig. 1, une effeuilleuse agricole 1 comprend une structure apte à être transportée selon une direction de déplacement horizontal qui est celle de l'axe horizontal X sensiblement parallèle au plan XY du sol. Cette effeuilleuse comprend une structure 3 et un rail 6 sensiblement rectiligne selon un deuxième axe Z2 qui est généralement perpendiculaire à l'axe horizontal X.

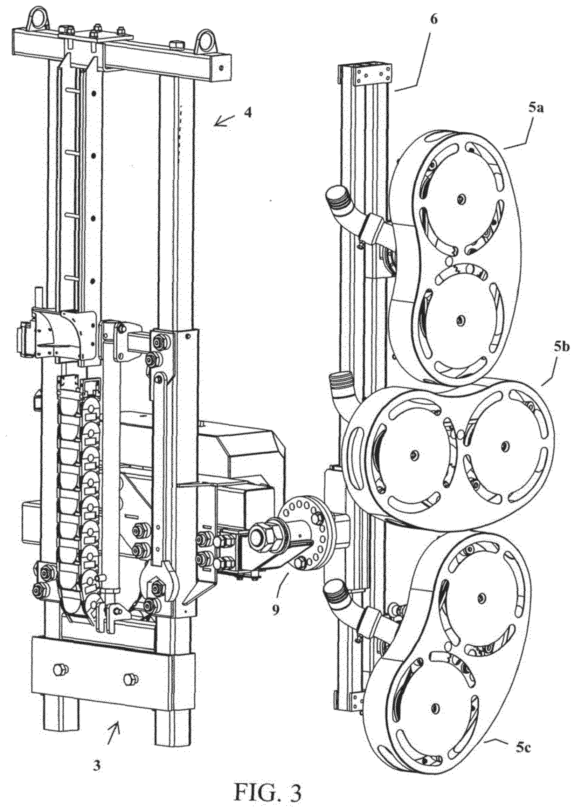

Au moins deux têtes d'effeuillage 5 sont fixées sur le rail 6. Elles sont fixées de telle sorte que leur axe de travail T soit sensiblement parallèle à l'axe horizontal X et perpendiculaire au deuxième axe Z2. L'axe de travail T est la direction dans laquelle l'air comprimé est soufflé par les têtes d'effeuillage pneumatiques 5, c'est-à-dire une direction sensiblement normale au feuillage à traiter. Selon une caractéristique importante de l'invention, les têtes d'effeuillage 5 sont solidarisées au rail 6 de telle sorte que la position de chacune d'elles puisse être modifiée indépendamment de chacune des autres. Ceci permet avantageusement d'adapter le positionnement des têtes d'effeuillage 5, et donc la hauteur et la densité d'effeuillage, à la hauteur et à la densité du feuillage. Selon une autre caractéristique, afin d'individualiser leur position, chacune des têtes d'effeuillage 5 est montée de manière à permettre un mouvement de translation PZa, PZb, PZc des têtes d'effeuillage 5 (5a, 5b, 5c) le long du rail 6, chacun de ces mouvements étant indépendant l'un de l'autre. Comme le montrent notamment les fig. 1, 2 et 5, chacune des trois têtes d'effeuillage 5 représentées comprend, au niveau de son support 10a-c, un moyen apte à générer un mouvement de translation le long du rail 6. Ceci permet de rapprocher deux têtes d'effeuillage 5. L'une par rapport à l'autre ou ensemble de manière à densifier l'effeuillage sur une plus petite hauteur ou, au contraire, à écarter davantage deux têtes d'effeuillage 5 de manière à augmenter la hauteur d'effeuillage au détriment de la densité d'effeuillage. Les têtes d'effeuillage 5 utilisées pour illustrer l'invention, développée par la demanderesse, comprennent deux modules d'éjection d'air disposés côte à côte et ayant des axes d'éjection d'air ou axes de travail T sensiblement parallèles. De plus, il est possible de modifier l'intensité de l'effeuillage en modifiant l'orientation d'une tête d'effeuillage 5 autour de son axe de travail T. Comme plus particulièrement illustré à la Fig. 3, la tête d'effeuillage Sa permettant l'effeuillage des feuilles les plus hautes est disposée verticalement. L'effeuilleuse selon l'invention offre ainsi une hauteur d'effeuillage accrue au détriment d'une densité d'effeuillage réduite. La tête d'effeuillage médiane 5b est disposée horizontalement. Elle offre ainsi une hauteur d'effeuillage réduite pour une densité d'effeuillage accrue. La tête d'effeuillage la plus basse 5c est disposée dans une orientation intermédiaire. Elle offre ainsi un compromis, avec une hauteur d'effeuillage moyenne et une densité d'effeuillage moyenne.

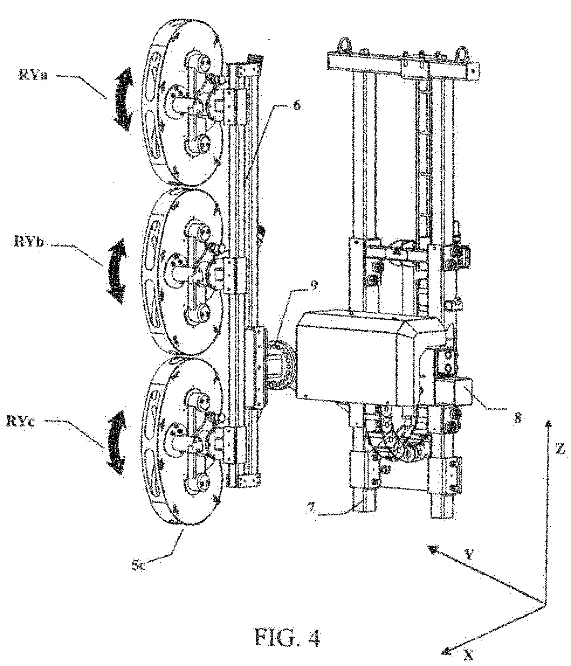

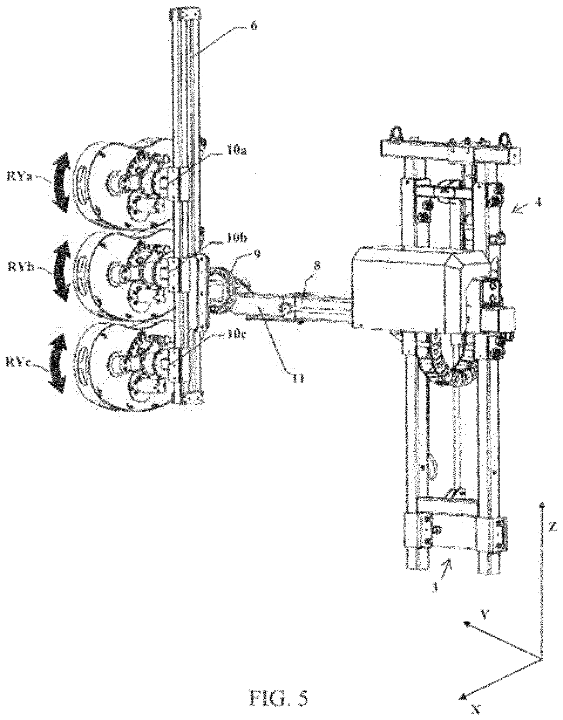

De plus, selon une autre caractéristique, au moins une, de préférence chacune, des têtes d'effeuillage 5 a un autre degré de liberté de rotation RYa, RYb, RYc, par rapport au rail 6, autour de l'axe de travail T, comme le montre le mieux la Fig. 5. Leur montage permettant ainsi un degré de liberté rotatif RYa, RYb, RYc et donc de modifier l'orientation de chacune des têtes d'effeuillage 5a-c indépendamment de chacune des autres afin de modifier la hauteur et/ou la densité de l'effeuillage. La combinaison des degrés de liberté consistant en un mouvement de translation PZa, PZb, PZc et/ou un mouvement de rotation RYa, RYb, RYc, permet aux têtes d'effeuillage 5a-c d'adopter des configurations variables, faisant ainsi varier la densité et/ou la hauteur d'effeuillage. Les figures 4 et 5 montrent deux exemples de telles configurations. Selon une autre caractéristique, le rail 6, portant les têtes d'effeuillage comprend en outre au moins une articulation autour d'un axe sensiblement parallèle à l'axe horizontal X. Ceci permet de rendre le rail 6 conforme à une ligne interrompue. En fonction du nombre d'articulations, le rail 6 peut adopter une forme en V, L, C, M, W ou autre, afin d'épouser au plus près la forme de l'arbre ou du buisson à défolier. Ceci est particulièrement avantageux dans le cas d'une forme non longitudinale, ce qui peut être le cas, par exemple, pour les arbres fruitiers, en fonction de leur forme naturelle ou de leur taille. Le rail 6 est porté par une structure 3. Cette structure 3 comprend une extrémité inférieure fixée 7 ou partie fixe 7 et une extrémité supérieure mobile ou partie mobile ou châssis 2. La structure 3 est apte à être fixée à son extrémité inférieure fixée 7 à un moyen de transport (non représenté), pour le transporter selon le premier axe horizontal X. Il s'agit de l'axe d'avance du moyen de transport mobile, qui est sensiblement parallèle à une rangée de végétaux ou analogues à effeuiller. Le moyen de transport peut être un véhicule agricole, tel qu'un tracteur ou une remorque tirée par un tracteur ou tout autre moyen équivalent. La structure 3 est transportée par le véhicule de transport mobile et supporte elle-même le rail 6, solidaire de l'extrémité supérieure mobile 2 ou d'une partie mobile ou châssis de celle-ci.

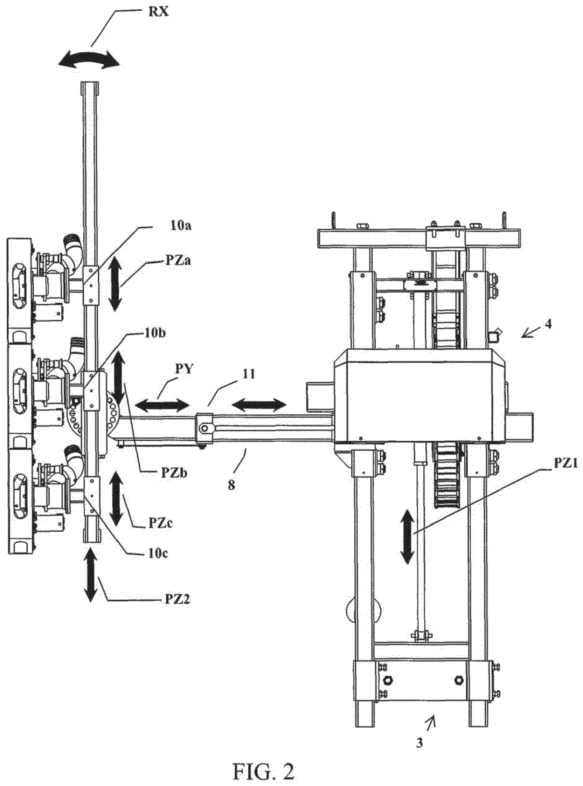

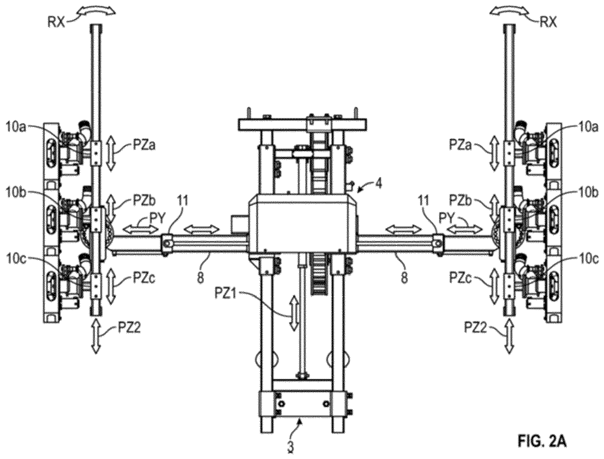

La structure 3 est déformable au moyen d'une ou plusieurs liaisons. Ceci permet de décaler la position, d'un seul mouvement, du rail 6 et de toutes les têtes d'effeuillage 5a-c portées par ce dernier. L'architecture réelle de cette structure 3 peut être arbitraire. La description suivante illustre un exemple possible de structurer 3. La structure 3 peut être étendue ou rétractée verticalement comme un bras. Par analogie anatomique, son extrémité inférieure fixée 7 est celle la plus proche du véhicule transporteur, tandis que l'extrémité supérieure mobile 2 est la plus éloignée du véhicule transporteur. Afin de pouvoir amener le rail 6 et les têtes d'effeuillage 5a-c qu'il porte à proximité d'un rang de végétation, et de pouvoir s'adapter à une rangée de buissons tels que des vignes ou des groseilliers, etc. ou à une rangée d'arbres tels que pommiers, poiriers, etc. de taille, volume et forme qui peuvent varier, la charpente de la structure 3 est déformable. Cette déformation est rendue possible par des moyens de réglage disposés entre l'extrémité inférieure fixée 7 et l'extrémité supérieure mobile 2. En se référant en particulier à la Fig. 1, un premier moyen de réglage est constitué par une première liaison apte à générer un mouvement de translation verticale PZ1. Cette liaison se situe entre une extrémité inférieure 7 solidaire du véhicule transporteur et la partie supérieure mobile 2 de la structure 3. Il permet un mouvement de translation sensiblement selon un axe vertical Z. Cet axe vertical Z est perpendiculaire à l'axe X de déplacement sur le sol et à l'axe Y, (donc au plan XY) et est perpendiculaire au premier axe X. Comme on le voit également sur la Figure 5, une poutre 8 formant moyen de support du rail peut être entraînée par rapport à une extrémité inférieure 7 avec un mouvement de translation parallèle à l'axe Z, la/les poutre(s) portant le rail 6, des têtes d'effeuillage 5, un moyen d'inclinaison variable 9, et une liaison coulissante 11 associée à l'extrémité supérieure mobile 2 de la structure 3. Un troisième moyen de réglage est constitué par une troisième liaison apte à générer un mouvement de translation PY, voir notamment les fig. 1 et 2, selon le deuxième axe Y, pour déplacer le rail 6 par rapport à la structure 3. Selon une caractéristique, la poutre 8 est horizontale et comprend une liaison coulissante 11 qui peut s'étendre sensiblement parallèlement à la poutre 8. La liaison coulissante 11 est mobile avec une translation selon le deuxième axe Y et fait varier l'écartement du ou des rail(s) 6 ainsi que les pièces qu'il supporte par rapport à la structure 3.

Un quatrième moyen de réglage optionnel consiste en une quatrième liaison autorisant un degré de liberté permettant une rotation RX autour d'un axe sensiblement parallèle au premier axe Z. Un moyen d'inclinaison variable 9, voir notamment la Fig. 5, met en oeuvre la quatrième liaison assurant un degré de liberté rotatif RX, permettant un certain degré de basculement autour d'un axe sensiblement parallèle au premier axe X, des pièces supportées par le rail 6, par rapport à la structure 3. Selon un mode de réalisation de l'invention, la quatrième liaison permettant un degré de liberté de rotation RX comprend des flasques en butée, susceptibles d'être tournés l'un par rapport à l'autre et d'être verrouillés ensemble selon des orientations mutuelles variables. Comme illustré à la Fig. 3, la quatrième liaison comprend deux flasques circulaires en regard, porteurs de trous disposés sur une même circonférence permettant de définir et de maintenir une orientation donnée au moyen d'au moins une vis traversante solidarisant les deux flasques entre eux, ou encore à l'aide d'un entraînement à vis variable ou par intervention manuelle. Un deuxième moyen de réglage est constitué par une deuxième liaison apte à générer un mouvement de translation PZ2 sensiblement selon un deuxième axe Z2. Cet axe Z2, qui est l'axe du rail 6, est généralement perpendiculaire à l'axe X. En raison de sa capacité à s'incliner en raison du degré de liberté de rotation RX, son orientation peut varier dans un plan Y-Z perpendiculaire à X. Sa position par défaut, comme le montrent les figures, est sensiblement verticale, c'est-à-dire sensiblement parallèle à l'axe vertical Z. Les seconds moyens de réglage peuvent faire varier la position du rail 6 ainsi que les pièces portées sur celui-ci par rapport à la structure 3 dans la direction PZ2 suivant l'axe Z2, dans les deux sens. Il peut ainsi régler la position de toutes les têtes d'effeuillage 5a-c avec un mouvement coordonné ou différencié.

FIGURE 1 illustre une configuration de la structure 3 à la position la plus basse du degré de liberté PZ1, avec le degré de liberté PY produisant sa position la plus compacte, et la quatrième liaison permettant la rotation RX réglée de sorte que l'axe Z2 du rail 6, coïncide avec l'axe Z.

FIGURE 2 illustre une autre configuration de la structure 3 à la position la plus élevée du mouvement PZ1, avec le degré de liberté PY produisant sa position la plus étendue, et la quatrième liaison permettant la rotation RX à nouveau réglée de sorte que l'axe Z2 du rail 6, coïncide avec l'axe Z. Il va de soi que chacune des liaisons peut être entraînée pour adapter une position selon l'un des degrés de liberté indépendamment des autres. En raison de la façon dont la structure 3 est organisée, un déplacement de l'une quelconque des liaisons influence la position de tous les composants supportés par le rail 6. Toutes les liaisons ont été décrites ci-dessus comme mécaniques. L'homme du métier sait mettre en oeuvre des composants permettant de réaliser une liaison apte à générer un mouvement de translation ou une liaison apte à générer un mouvement de rotation. Il est possible d'effectuer, indépendamment pour chaque structure, un réglage manuel sur l'effeuilleuse 1 à l'arrêt, une fois par rang ou par type de plantation. Il est également possible, indépendamment pour chaque structure, que les liaisons, translations ou rotations, soient activées par des moyens motorisés, commandés et entraînés par tout moyen. Le réglage des liaisons motorisées permet avantageusement de modifier plus facilement la configuration de la structure 3, y compris lors du déplacement de l'effeuilleuse 1, et y compris à partir du véhicule qui la porte, afin d'adapter le positionnement de là au moins une tête d'effeuillage par rapport à la végétation.

Selon une caractéristique, comme illustré aux Fig. 1-5, la première liaison apte à générer un mouvement de translation PZ1 et la seconde liaison coulissante PY sont motorisées, de préférence par un actionneur. Selon une autre particularité, l'effeuilleuse 1 peut comprendre en outre un second rail, sensiblement symétrique au premier rail par rapport à la structure 3. Ainsi, une telle effeuilleuse 1 comporte au moins une tête d'effeuillage 5 portée par la structure 3, pour effectuer un effeuillage d'un côté, par exemple vers la gauche sur les fig. 1 et 2, et comporte au moins une tête d'effeuillage portée par la même structure 3, pour effectuer un effeuillage de l'autre côté, ou à droite sur les figures. Une telle caractéristique permet avantageusement, en un seul passage, au véhicule transporteur de procéder à l'effeuillage simultanément sur deux rangées voisines de végétation. Ici, la troisième liaison génère un mouvement de translation PY essentiellement horizontal de chaque rail 6 par rapport à la structure 3 permet d'adapter l'effeuilleuse 1 à la distance entre les deux rangées de végétation. Les deux rails peuvent être complètement indépendants. Avantageusement, selon une autre caractéristique, les premiers et seconds rails reliés à la structure commune 3 par des poutres 8 sont semblables et comportent tous les mêmes mouvements de translation et de rotation. Dans ce cas, il n'y a qu'un seul châssis 2. Une poutre horizontale 8 comprend deux liaisons coulissantes 11 une à chacune de ses extrémités. Ainsi, la structure 3 comprend une liaison apte à générer un mouvement de translation PY de son rail s'étendant selon le deuxième axe Y à partir de la partie mobile ou châssis 2 de la structure et dirigée d'un côté, par exemple le côté gauche, et la seconde structure comprend une autre articulation apte à générer un mouvement de translation PY de son rail selon le deuxième axe Y à partir de la partie mobile ou châssis 2 de la structure dans le sens opposé, c'est-à-dire le côté droit. Les têtes d'effeuillage 5a-c doivent être alimentées en énergie pour leur permettre de remplir leur fonction d'effeuillage. Dans le cas des têtes d'effeuillage pneumatiques 5 telles qu'illustrées, l'effeuilleuse 1 comprend en outre une alimentation pneumatique (non représentée). Cette alimentation pneumatique convient à la production d'air comprimé. Il comprend un certain nombre de conduites (non représentées) reliant un générateur d'air comprimé à chacune de la au moins une tête d'effeuillage 5a-c pour distribuer de l'air comprimé. Cette alimentation pneumatique peut être montée sur la structure 3, portée par le véhicule transporteur ou encore par une remorque attelée au véhicule transporteur. Avantageusement, cette alimentation pneumatique tire son énergie d'une prise de force du véhicule transporteur. La capacité de l'alimentation pneumatique est configurable en fonction de la puissance d'effeuillage souhaitée et du nombre de têtes d'effeuillage. N'importe quel nombre de têtes d'effeuillage peut être utilisé. Pour décaper la végétation de hauteur limitée, une seule tête d'effeuillage 5 peut être suffisante. Les dessins montrent une configuration avec trois têtes d'effeuillage 5a-c. Dix têtes d'effeuillage 5 ou plus peuvent être utilisées en fonction de la hauteur à effeuiller et de la densité d'effeuillage souhaitée. La longueur du rail 6 est adaptée en conséquence. L'invention a été illustrée et décrite en détail dans les dessins et la description qui précède. Ceci doit être considéré comme illustratif et donné à titre d'exemple et non comme limitant l'invention à cette seule description. De nombreuses variantes de réalisation sont possibles.

### Liste des signes de référence

1: effeuilleuse,
2: extrémité supérieure mobile ou châssis,
3: structure
5: tête d'effeuillage,
6: rail,
7: extrémité inférieure fixée ou partie fixe,
8: poutre,
9: moyens d'inclinaison variable,
10a-c: prend en charge,
11: liaison coulissante,
X, Y, Z, Z2: axes,
PZ1: première liaison capable de générer un mouvement de translation,
PZ2: deuxième liaison capable de générer un mouvement de translation,
PY: troisième liaison capable de générer un mouvement de translation,
RX: quatrième liaison capable de générer un mouvement de rotation,
PZa, PZb, PZc: liaisons capables de générer un mouvement de translation
RYa, RYb, RYc: liaisons capables de générer un mouvement de rotation,
T: axe de la tête d'effeuillage.

## Revendications

1. Une effeuilleuse agricole (1) présentant les degrés de liberté lui permettant de s'adapter à toutes les configurations des espèces de végétation sur lesquelles on souhaite pratiquer la défoliation grâce à sa capacité à s'adapter à la forme particulière des végétaux comprenant au moins une première structure (3) apte à être adaptée aux moyens de transport conventionnels suivant une direction horizontale de déplacement selon un axe (X) sensiblement parallèle au plan XY du sol, cette effeuilleuse comprenant en outre:
- une partie fixe (7) apte à être solidarisée par une extrémité inférieure de celle-ci auxdits moyens de transport
- une partie mobile ou châssis (2), déplaçable verticalement par rapport à ladite partie fixée (7),
- au moins un rail (6) portant au moins deux têtes d'effeuillage (5), supportées par des moyens de support (8) portés par ladite partie mobile ou châssis (2), le au moins un rail étant espacé de ladite structure et généralement parallèle à celle-ci,
- une première liaison apte à générer un mouvement de translation vertical PZ1, obtenu en faisant coulisser la partie supérieure de ladite structure (3) par rapport à ladite partie inférieure fixée (7) de ladite structure (3), selon un axe généralement vertical perpendiculaire à ladite direction horizontale de mouvement (X),
- une deuxième liaison apte à générer un mouvement de translation verticale PZ2 dudit au moins un rail (6) par rapport auxdits moyens de support (8) portés par ladite partie mobile ou châssis (2) selon un deuxième axe Z2 généralement perpendiculaire à ladite direction horizontale de mouvement (X),
- une troisième liaison apte à faire varier un espacement entre ledit au moins un rail et ladite structure (3) en générant un mouvement de translation PY dudit au moins un rail par rapport à ladite structure selon une direction généralement orthogonale à ladite direction d'axe vertical et selon un axe desdits moyens de support (8),
- une quatrième liaison apte à générer un mouvement de rotation RX dudit au moins un rail (6) autour d'un axe généralement perpendiculaire à ladite direction horizontale de mouvement (X), cette effeuilleuse étant **caractérisée par**:
- une source pneumatique apte à produire de l'air comprimé destiné à être éjecté par les têtes d'effeuillage (5), et un système de tuyaux reliant la source pneumatique à chacune des têtes d'effeuillage pour leur fournir de l'air comprimé à éjecter, et
- les axes des quatre liaisons et la direction de déplacement des moyens de transport étant parallèles ou orthogonaux les uns par rapport aux autres et par rapport à ladite direction horizontale de mouvement (X).

2. L' effeuilleuse agricole (1) selon la revendication 1, laquelle comporte, un second rail (6) permettant d'effectuer l'effeuillage de l'un et de l'autre côté de ladite structure (3) dans une direction horizontale de déplacement selon un axe (X) sensiblement parallèle au sol, le second rail (6) symétrique par rapport au premier, portant au moins une tête d'effeuillage (5) supportée par des moyens de support (8) portés par ladite partie mobile ou châssis (2) et les deux rails (6), étant espacés de ladite structure (3) et généralement parallèles à celle-ci.

3. L'effeuilleuse (1) selon la revendication 1 ou 2, dans laquelle la première structure et une seconde structure forment un seul assemblage.

4. L'effeuilleuse (1) selon l'une quelconque des revendications précédentes, dans laquelle les au moins deux têtes d'effeuillage sont montées coulissantes sur le rail et mobiles par un mouvement de translation le long du/des rail(s) avec leurs axes de travail sensiblement perpendiculaires à un axe Z2 du rail.

5. L'effeuilleuse (1) selon l'une quelconque des revendications précédentes, dans laquelle au moins une des têtes d'effeuillage (5) a un degré de liberté permettant un mouvement de translation (PZa, PZb, PZc) de celle(s)-ci le long du/des rail(s) (6) indépendamment de chacune des autres têtes d'effeuillage.

6. L'effeuilleuse (1) selon l'une quelconque des revendications précédentes dans laquelle au moins une des têtes d'effeuillage desdites têtes d'effeuillage (5) a en outre un degré de liberté permettant un mouvement rotatif (RYa, RYb, RYc) par rapport à un axe de travail (T).

7. L'effeuilleuse (1) selon l'une quelconque des revendications précédentes, dans laquelle le rail (6) portant les têtes d'effeuillage (5) comprend en outre au moins une articulation autour d'un axe sensiblement parallèle à la direction de déplacement horizontale (X) permettant d'adapter le/les rail(s) à une ligne courbe ou une ligne brisée.

8. L'effeuilleuse (1) selon l'une quelconque des revendications précédentes, dans laquelle la première liaison apte à générer un mouvement de translation verticale PZ1, obtenu en faisant coulisser la partie supérieure de ladite structure (3) par rapport à la partie inférieure fixée (7) de celle-ci ladite troisième liaison étant apte à générer un mouvement de translation PY de l'un ou des deux rails (6) par rapport à ladite structure (3), sont motorisées.

9. L'effeuilleuse (1) selon l'une quelconque des revendications précédentes, dans laquelle la première liaison apte à générer un mouvement de translation verticale PZ1 et la troisième liaison apte à générer un mouvement de translation PY du rail par rapport à la structure sont mises en oeuvre par un actionneur.

10. L'effeuilleuse (1) selon l'une quelconque des revendications précédentes, comprenant un seul moyen de support consistant en ladite structure (3) supportant chacun desdits rails (6) et comprenant deux liaisons coulissantes (11) chacune apte à faire varier un espacement entre chacun desdits rails (6) et ladite structure (3).

## Patentansprüche

1. Landwirtschaftliche Entlaubungsmaschine (1), die die Freiheitsgrade aufweist, die es ihr erlauben, sich an alle Arten der Pflanzengattungen, an denen die Entlaubung vorgenommen werden soll, anzupassen, dank ihrer Fähigkeit, sich an die besondere Form der Pflanzen anzupassen, umfassend mindestens eine erste Struktur (3), die geeignet ist, an die herkömmlichen Fördermittel in einer horizontalen Verlagerungsrichtung entlang einer Achse (X) im Wesentlichen parallel zur Ebene XY des Bodens angepasst zu werden, wobei diese Entlaubungsmaschine ferner umfasst:
- einen festen Teil (7), der geeignet ist, mit einem unteren Ende desselben mit den Fördermitteln verbunden zu werden,
- einen beweglichen Teil oder Rahmen (2), der vertikal in Bezug zum festen Teil (7) verlagerbar ist,
- mindestens eine Schiene (6), die mindestens zwei Entlaubungsköpfe (5) trägt, die von Haltemitteln (8) getragen werden, die von dem beweglichen Teil oder Rahmen (2) getragen werden, wobei die mindestens eine Schiene von der Struktur beabstandet und im Allgemeinen zu dieser parallel ist,
- eine erste Verbindung, die geeignet ist, eine vertikale Translationsbewegung PZ1 zu erzeugen, die erhalten wird, wobei der obere Teil der Struktur (3) in Bezug zum festen unteren Teil (7) der Struktur (3) entlang einer im Allgemeinen vertikalen Achse senkrecht auf die horizontale Verlagerungsrichtung (X) gleitet,
- eine zweite Verbindung, die geeignet ist, eine vertikale Translationsbewegung PZ2 der mindestens einen Schiene (6) in Bezug zu den Haltemitteln (8), die von dem beweglichen Teil oder Rahmen (2) getragen werden, entlang einer zweiten Achse Z2 im Allgemeinen senkrecht auf die horizontale Verlagerungsrichtung (X) zu erzeugen,
- eine dritte Verbindung, die geeignet ist, eine Beabstandung zwischen der mindestens einen Schiene und der Struktur (3) zu variieren, wobei eine Translationsbewegung PY der mindestens einen Schiene in Bezug zu der Struktur entlang einer Richtung im Allgemeinen orthogonal zu der Richtung einer Vertikalachse und entlang einer Achse der Haltemittel (8) erzeugt wird,
- eine vierte Verbindung, die geeignet ist, eine Rotationsbewegung RX der mindestens einen Schiene (6) um eine Achse im Wesentlichen senkrecht auf die horizontale Verlagerungsrichtung (X) zu erzeugen, wobei diese Entlaubungsmaschine **gekennzeichnet ist durch**:
- eine Druckluftquelle, die geeignet ist, Druckluft zu erzeugen, die dazu bestimmt ist, **durch** die Entlaubungsköpfe (5) ausgeblasen zu werden, und ein Rohrsystem, das die Druckluftquelle mit jedem der Entlaubungsköpfe verbindet, um an sie die auszublasende Druckluft zu liefern, und
- wobei die Achsen der vier Verbindungen und die Verlagerungsrichtung der Fördermittel zueinander und in Bezug zu ihrer horizontalen Verlagerungsrichtung (X) parallel oder orthogonal sind.

2. Landwirtschaftliche Entlaubungsmaschine (1) nach Anspruch 1, die eine zweite Schiene (6) umfasst, die es ermöglicht, die Entlaubung auf der einen und der anderen Seite der Struktur (3) in einer horizontalen Verlagerungsrichtung entlang einer Achse (X) im Wesentlichen parallel zum Boden durchzuführen, wobei die zweite Schiene (6), die zur ersten symmetrisch ist, mindestens einen Entlaubungskopf (5) trägt, der von Haltemitteln (8) getragen wird, die von dem beweglichen Teil oder Rahmen (2) getragen werden, und wobei die zwei Schienen (6) von der Struktur (3) beabstandet und im Allgemeinen zu dieser parallel sind.

3. Entlaubungsmaschine (1) nach Anspruch 1 oder 2, bei der die erste Struktur und eine zweite Struktur einen einzigen Zusammenbau bilden.

4. Entlaubungsmaschine (1) nach einem der vorhergehenden Ansprüche, bei der die mindestens zwei Entlaubungsköpfe gleitend auf der Schiene und durch eine Translationsbewegung entlang der Schiene(n) beweglich montiert sind, wobei ihre Arbeitsachsen im Wesentlichen auf eine Achse Z2 der Schiene senkrecht sind.

5. Entlaubungsmaschine (1) nach einem der vorhergehenden Ansprüche, bei der mindestens einer der Entlaubungsköpfe (5) einen Freiheitsgrad hat, der eine Translationsbewegung (PZa, PZb, PZc) des(r)selben entlang der Schiene(n) (6) unabhängig von jedem der anderen Entlaubungsköpfe erlaubt.

6. Entlaubungsmaschine (1) nach einem der vorhergehenden Ansprüche, bei der mindestens einer der Entlaubungsköpfe (5) ferner einen Freiheitsgrad hat, der eine Rotationsbewegung (RYa, RYb, RYc) in Bezug zu einer Arbeitsachse (7) erlaubt.

7. Entlaubungsmaschine (1) nach einem der vorhergehenden Ansprüche, bei der die Schiene (6), die die Entlaubungsköpfe (5) trägt, ferner mindestens ein Gelenk um eine Achse im Wesentlichen parallel zu der horizontalen Verlagerungsrichtung (X) umfasst, das es ermöglicht, die Schiene(n) an eine gebogene Linie oder eine unterbrochene Linie anzupassen.

8. Entlaubungsmaschine (1) nach einem der vorhergehenden Ansprüche, bei der die erste Verbindung, die geeignet ist, eine vertikale Translationsbewegung PZ1 zu erzeugen, die erhalten wird, wobei der obere Teil der Struktur (3) in Bezug zum unteren festen Teil (7) derselben gleitet, und die dritte Verbindung, die geeignet ist, eine Translationsbewegung PY der einen oder der zwei Schienen (6) in Bezug zu der Struktur (3) zu erzeugen, motorbetrieben sind.

9. Entlaubungsmaschine (1) nach einem der vorhergehenden Ansprüche, bei der die erste Verbindung, die geeignet ist, eine vertikale Translationsbewegung PZ1 zu erzeugen, und die dritte Verbindung, die geeignet ist, eine Translationsbewegung PY der Schiene in Bezug zu der Struktur zu erzeugen, durch einen Aktuator eingesetzt werden.

10. Entlaubungsmaschine (1) nach einem der vorhergehenden Ansprüche, umfassend ein einziges Haltemittel, das in der Struktur (3) besteht, die jede der Schienen (6) trägt, und umfassend zwei Gleitverbindungen (11), die jeweils geeignet sind, eine Beabstandung zwischen jeder der Schienen (6) und der Struktur (3) zu variieren.

## Claims

1. An agricultural leaf stripper (1) having the degrees of freedom allowing it to adapt to all configurations of the vegetation species on which defoliation is desired thanks to its ability to adapt to the particular shape of the plants comprising at least a first structure (3) capable of being adapted to conventional means of transport in a horizontal direction of movement along an axis (X) substantially parallel to the XY plane of the ground, this leaf stripper further comprising :
- a fixed part (7) capable of being secured by a lower end thereof to said means of transport
- a mobile part or chassis (2), this mobile part or chassis (2) being movable vertically relative to said fixed part (7),
- at least one rail (6) carrying at least two leaf stripping heads (5), supported by support means (8) carried by said mobile part or chassis (2), the at least one rail being spaced from said structure and generally parallel to it,
- a first linkage capable of generating a vertical translational movement PZ1, obtained by sliding the upper part of said structure (3) relative to said fixed lower part (7) of said structure (3), along a generally vertical axis perpendicular to said horizontal direction of movement (X),
- a second linkage capable of generating a vertical translation movement PZ2 of said at least one rail (6) relative to said support means (8) carried by said movable part or chassis (2) along a second axis Z2 generally perpendicular to said horizontal direction of movement (X),
- a third linkage capable of varying a spacing between said at least one rail and said structure (3) by generating a translation movement PY of said at least one rail relative to said structure along a direction generally orthogonal to said vertical axis direction and along an axis of said support means (8),
- a fourth linkage capable of generating a rotation movement RX of said at least one rail (6) about an axis generally perpendicular to said horizontal direction of movement (X), the leaf stripper being **characterized by**:
- a pneumatic source capable of producing compressed air intended to be ejected by the stripping heads (5), and a system of pipes connecting the pneumatic source to each of the stripping heads to provide them with compressed air to be ejected, and
- the axes of the four linkages and the direction of movement of the transport means being parallel or orthogonal to each other and to said horizontal direction of movement (X),

2. The agricultural leaf stripper (1) according to claim 1, which comprises a second rail (6) thus making it possible to strip the leaves from one and the other side of said structure (3) in a horizontal direction of movement along an axis (X) substantially parallel to the ground, the second rail (6) which is symmetrical with respect to the first, carrying at least one stripping head (5) supported by support means (8) carried by said movable part or chassis (2) and the two rails (6) being spaced from said structure (3) and generally parallel thereto.

3. The leaf stripper (1) according to claim 1 or 2, in which the first and a second structure (6) form a single assembly.

4. The leaf stripper (1) according to any one of the preceding claims, in which said at least two leaf stripping heads (5) are slidably mounted on the one or both rails (6) and movable in a translational movement along the one or both rails (6), their working axes (T) being substantially perpendicular to the axis Z2 of the rail.

5. The leaf stripper (1) according to any one of the preceding claims, wherein at least one of said stripping heads (5) has a degree of freedom allowing a translational movement (PZa, PZb, PZc) thereof along said one or both rails (6) independently of each of the other stripping heads

6. The leaf stripper (1) according to any one of the preceding claims, wherein at least one of said stripping heads (5) further has a degree of freedom allowing a rotary movement (RYa, RYb, RYc) relative to a working axis (T).

7. The leaf stripper (1) according to any one of the preceding claims, wherein the rail (6) carrying the stripping heads (5) includes at least one articulation about an axis substantially parallel to said horizontal direction of movement (X), thus making it possible to adapt said rail or rails to a curved line or to a broken line.

8. The leaf stripper (1) according to any one of the preceding claims, wherein said first linkage capable of generating a vertical translation movement PZ1, obtained by sliding the upper part of said structure (3) relative to the fixed lower part (7) thereof and said third linkage capable of generating a translation movement PY of one or both rail(s) (6) relative to said structure (3) are motorized.

9. The leaf stripper (1) according to any one of the preceding claims, wherein said first linkage capable of generating a vertical translation movement PZ1 and said third linkage capable of generating a translation movement PY of the rail relative to said structure are actuated by an actuator.

10. The leaf stripper (1) according to any one of the preceding claims, comprising a single support means consisting of said structure (3) supporting each of said rails (6) and comprising two sliding linkages (11) each capable of varying a spacing between each of said rails (6) and said structure (3).
